# EUROPÄISCHE PATENTANMELDUNG

(11) **EP 0 576 849 A1**
(43) Veröffentlichungstag der Anmeldung: **05.01.1994**
(21) Anmeldenummer: 93108844.7
(22) Anmeldetag: 02.06.1993
(51) Int. Cl.: B29C 65/12

(54) **Schweissvorrichtung**

(30) Priorität: 03.07.1992 DE 9208938 U
(71) Anmelder: Wolff GmbH, D-74321 Bietigheim-Bissingen (DE)
(72) Erfinder: Wolff, Dieter, Dipl.-Ing., W-7120 Bietigheim/Bissingen (DE)
(74) Vertreter: Lewandowsky, Klaus

(57) **Zusammenfassung**

Es handelt sich um eine Vorrichtung zum Verschweißen von mit Fugenabstand nebeneinander verlegten plattenförmigen oder bahnenförmigen Bodenbelägen aus Kunststoffwerksoff unter Einbringen einer mittels Heißluft erweichten Schweißschnur (36) in eine Fuge (47). Sie besteht aus einem tragbaren motorisch angetriebenen Wagen (11), an dessen Gehäuse (12) zwei auf einer gemeinsamen Achse (13) sitzende Antriebsräder (14,15) und ein Stützrad (16) gelagert sind, sowie aus einem Heißluftgebläse (50) und einer mit demselben verbundenen Düse (19) und einem Zuführrad (35) für die Schweißschnur. Dabei ist die Düse (19) ortsfest am Gehäuse (12) angeordnet und liegt gemeinsam mit dem Zuführrad (35) in einer Ebene vor der äußeren Stirnfläche (37) eines Antriebsrades (15).

Mit einer derartigen Vorrichtung kann die Zufuhr der Heißluft gezielt auf das Innere der Fuge sowie auf die strangförmige Schweißschnur gerichtet werden.

## Beschreibung

Die Erfindung betrifft eine Vorrichtung zum Verschweißen von mit Fugenabstand nebeneinander verlegten plattenförmigen oder bahnenförmigen Bodenbelägen aus Kunststoffwerkstoff unter Einbringen einer mittels Heißluft erweichten Schweißschnur in die Fuge, bestehend aus einem tragbaren motorisch angetriebenen Wagen, an dessen Gehäuse zwei auf einer gemeinsamen Motorachse sitzende Antriebsräder und ein Stützrad gelagert sind, sowie aus einem Heißluftgebläse und Einer mit demselben verbundenen Düse und einem Zuführrad für die Schweißschnur.

Zum Verbinden von verlegten platten- oder bahnenförmigen Bodenbelägen werden die zwischen den Platten oder Bahnen vorgesehenen Fugen mittels eines strangförmigen durch Heißluft erweichten Zusatzwerkstoff ausgefüllt. Je leichter plastifizierbar der Zusatzwerkstoff ist, um so bequemer geht das Ausfüllen der Fugen von statten, um so klebriger sind die Fugennahte jedoch im erkalteten Zustand, was die Begehbarkeit des Bodenbelags qualitativ herabsetzt.

Zum einen um die Beanspruchbarkeit der Bodenbeläge zu verbessern und zum anderen um die Klebrigkeit der Fugennähte zu vermeiden, werden sowohl für die Bodenbeläge als auch für die Zusatzwerkstoffe mit Füllstoffen angereicherte Kunststoffwerkstoffe verwendet.

Diese mit Füllstoffen angereicherten Werkstoffe sind aber wesentlicher schwieriger zu verarbeiten, was vor allem für das Einschweißen der strangförmigen Zusatzwerkstoffe in die Fugen benachbarter Platten oder Bahnen gilt, weil sie schwieriger zu plastifizieren sind.

Bei bekannten Vorrichtungen dieser Art muß die Düse bei Beendigung einer Schweißung von der Schweißnaht weggeschwenkt werden, damit die weiterhin austretende Heißluft den Bodenbelag nicht verbrennt. Dies ist umständlich und zeitaufwendig und erfordert einen komplizierten Aufbau der Vorrichtung.

Der Erfindung liegt die Aufgabe zugrunde, eine Vorrichtung zu schaffen, die eine ausreichende Leistungsfähigkeit zum Verschweißen derartiger Beläge gewährleistet und die außerdem für die Bearbeitung von wandnahen Fugen geeignet ist und einfach aufgebaut ist.

Diese Aufgabe wird erfindungsgemäß dadurch gelost, daß die Düse ortsfest am Gehäuse angeordnet ist und gemeinsam mit dem Zuführrad in einer Ebene vor der äußeren Stirnfläche eines Antriebsrades liegt.

In einer bevorzugten Ausbildung ist die Erfindung so gestaltet, daß die Düse als Schlitzdüse ausgebildet und über ein Wärmeleitrohr mit einem gehausefesten Ventilblock verbunden ist, an dem das Heißluftgebläse angeschlossen ist.

Dabei ist in vorteilhafter Weise die Breite des Schlitzes der Düse kleiner ausgebildet als die Breite einer Fuge zwischen zwei benachbarten Platten oder Bahnen eines Bodenbelags.

Mit einer derartigen Vorrichtung kann die Zufuhr der Heißluft ganz gezielt auf das Innere der Fuge sowie auf die strangförmige Schweißschnur gerichtet werden. Zum einen wird damit eine optimale Ausnutzung der zugeführten Energie bewirkt und zum anderen können auch schwer plastifizierbare gefüllte Kunststoffwerkstoffe zur Herstellung von qualitativ sauberen Fugennahten verarbeitet werden. Diese Fugennähte haben noch den zusätzlichen Vorteil, daß sie entweder gar keine oder nur eine sehr geringfügige Klebrigkeit im erkalteten Zustand aufweisen und somit keinen Schmutz annehmen, was ein gutes Aussehen der Fugennähte über eine lange Zeit gewahrleistet.

Im einzelnen ist die Erfindung so getroffen, daß das Stützrad derart am Gehäuse gelagert ist, daß es in einer Ebene mit der Düse und dem Zuführrad angeordnet ist und auf der Schweißfuge aufliegt. Auf diese Weise wird der in die Fuge eingebrachte Zusatzwerkstoff zusätzlich in die Fuge hineingedrückt und die Verbindung zwischen den Platten und Bahnen verbessert.

Darüber hinaus kann zu diesem Zweck an der äußeren Stirnfläche des der Düse zugekehrten Antriebsrads ein kreisförmig ausgebildeter und mit geringfügig kleinerem Durchmesser versehener elastischer Niederhalter für die eingeschweißte Schweißschnurvorgesehen sein.

In einer vorteilhaften Ausgestaltung der Vorrichtung ist ein im Ventilblock verschiebbar gelagerter Ventilschieber vorgesehen, der in einer ersten Stellung dem im Ventilblock ausgebildeten Zuführkanal für die Heißluft über einen ersten Ventilweg mit dem Freien und in einer zweiten Stellung über einen zweiten Ventilweg mit der Düse verbindet. Auf diese Weise wird die Heißluft der Düse nur zugeführt, wenn Schweißarbeit verrichtet wird. Bei einer Unterbrechung der Schweißarbeit wird die Heißluft wirkungslos ins Freie umgeleitet, was die Vorrichtung selbst und auch den Bodenbelag vor Zerstörung bewahrt.

Weitere Merkmale, Einzelheiten und Vorteile sind der Beschreibung eines in der Zeichnung dargestellten Ausführungsbeispiels der Erfindung sowie den weiteren Unteransprüchen zu entnehmen.

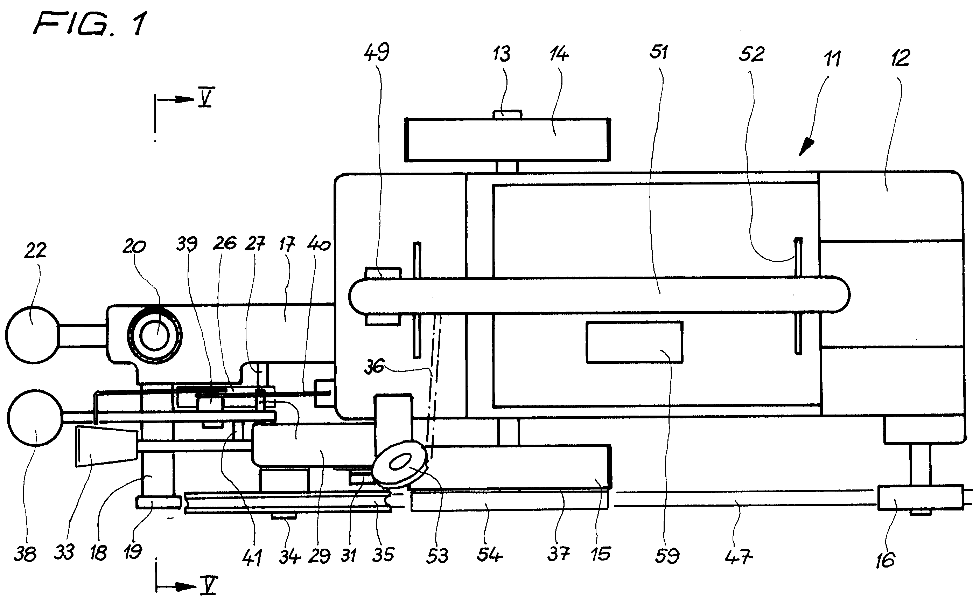

Die Zeichnung zeigt in der
- Fig. 1: die erfindungsgemäße Vorrichtung in einer Draufsicht,

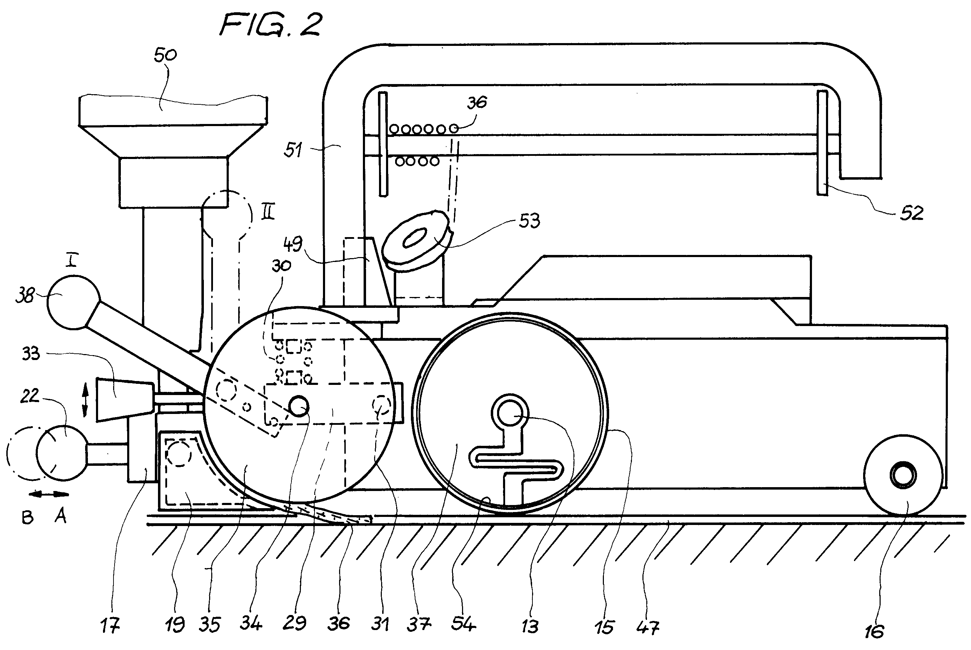

- Fig. 2: die Vorrichtung gemäß Fig.1 in einer Seitenansicht

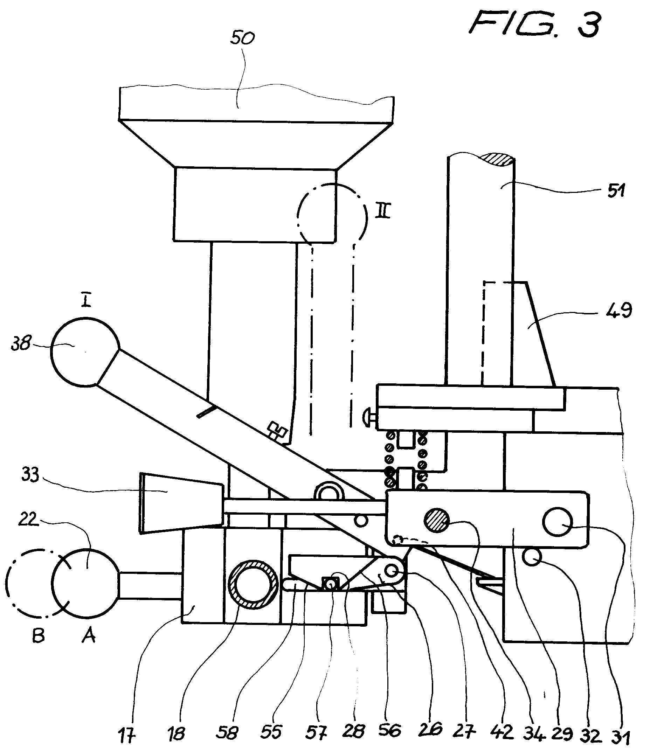

- Fig. 3: die Vorrichtung gemäß Fig.2 in einer vergrößerten Teildarstellung, bei der das Zuführrad und die Düse weggelassen worden sind,
- Fig. 4: einen an der Vorrichtung gemäß Fig.1 vorgesehenen Ventilblock in vergrößerter Darstellung im Schnitt und
- Fig. 5: den Ventilblock und die Düse in einer vergrößerten Teildarstellung im Schnitt entlang der Linie V-V in Fig.1.

Die als Ausführungsbeispiel dargestellte Vorrichtung zum Verschweißen von verlegten Bodenbelägen besteht aus einem Wagen 11, an dessen Gehäuse 12 zwei auf einer gemeinsamen Antriebsachse 13 sitzende Antriebräder 14 und 15, deren Mantelfläche mit rutschfestem Haftbelag versehen sind, sowie am hinteren Ende desselben ein Stützrad 16 gelagert sind.

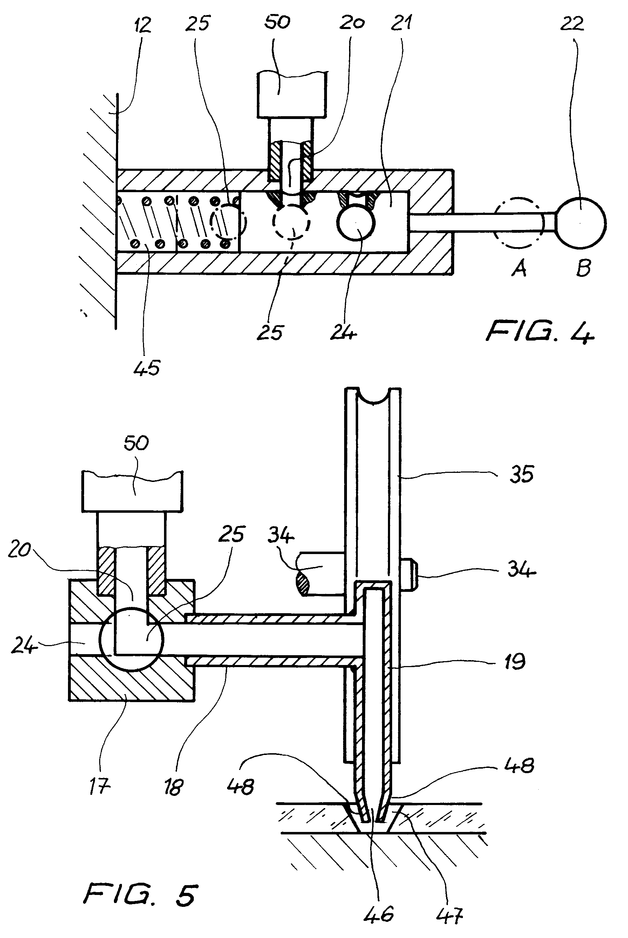

Am in Bewegungsrichtung vorderen Ende des Gehäuses 12 ist ein Ventilblock 17 angebracht, der zum einen über ein Leitrohr 18 mti einer als Schlitzdüse ausgebildeten Düse 19 in Verbindung steht und zum anderen über einen Zuführkanal 20 mit einem Heißluftgebläse 50 verbunden ist. Im Ventilblock 17 ist ein Ventilschieber 21 mittels eines ins Freie ragenden Tastglieds 22 bzw. einer Druckfeder 23 in zwei Stellungen bewegbar, in denen er einerseits über einen ersten Ventilweg 24 das Heißluftgebläse mit dem Freien und über eine zweiten Ventilweg 25 und das Leitrohr 18 mit der Düse 19 verbindet. Die Arbeitsweise wird noch anhand der Fig.4 und 5 im einzelnen beschrieben. Ferner ist am Ventilblock 17 eine mit einer Verriegelungsnut 28 versehene Klinke 26 lose verschwenkbar um eine Achse 27 gelagert. Die Klinke 26 ist mit zwei Schrägflächen 55 und 56 versehen. Ein am Ventilschieber 21 angebrachter Zapfen 57 ragt durch ein im Ventilblock 17 eingearbeitetes Langloch 58 in den Bereich der Klinke 26.

Schließlich ist oberhalb der Klinke 26 am Gehäuse 12 ein Einschalthebel 38 um eine Lagerstelle 39 in eine Ausschaltstellung I und eine Einschaltstellung II verschenkbar gelagert. Von einer Schenkelfeder 40 wird der Einschalthebel 38 entgegen dem Uhrzeigersinn beaufschlagt. Am Einschalthebel 38 sind ein mit der Handhabe 33 kooperierender Bolzen 41 sowie mit der Verriegelungsnut 28 der Klinke 26 kooperierender Stift 42 vorgesehen. Ferner ist am Einschalthebel 38 eine einstellbare Anschlagschraube 43 angeordnet, die mit dem Taster 44 eines Mikroschalters zusammenwirkt, der im Stromkreis eines im Gehäuse 12 untergebrachten Antriebsmotors liegt und für die Inbetriebnahme bzw. Stillsetzung des Motors sorgt.

An dem Gehäuse 12 ist weiterhin eine Schwinge 29 entgegen der Kraft einer Feder 30 um einen Lagerzapfen 31 verschenkbar gelagert, die sich an einem Anschlag 32 abstützt. Neben einer Handhabe 33 ist an der Schwinge 29 um eine Drehachse 34 ein Zufuhrrad 35 zum Zuführen einer Schweißschnur 36 drehbar gelagert. Das Zuführrad 35 liegt mit seiner Mantelfläche der Düse 19 gegenüber und beide Bauteile, die Düse 19 und das Zuführrad 35, sind derart angeordnet, daß sie in einer Ebene vor der Stirnfläche 37 des Antriebsrades 15 liegen. Durch eine derartige Anordnung können auch unmittelbar an einer Wand verlaufende Fugen verschweißt werden.

Wie in den Fig.4 und 5 dargestellt ist, ist der Ventilschieber 21 zylinderförmig ausgebildet und in einer im Ventilblock 17 ausgebildeten Bohrung 45 entgegen der Kraft der Druckfeder 23 aus einer Nichtheizstellung N, in der das Tastglied 22 in seiner Nichttaststellung A steht, in eine Heizstellung H verschiebbar, in der das Tastglied 22 in seiner Taststellung B steht.

Wenn das Tastglied 22 in seiner Nichttaststellung A steht, ist der Ventilschieber 21 mit seinem ersten Ventilweg 24 an den Zuführkanal 20 angeschlossen, und die Heißluft wird ins Freie geleitet. Wenn das Tastglied in seiner Taststellung B steht, ist der Ventilschieber 21 mit seinem zweiten Ventilweg 25 an den Zufuhrkanal 20 angeschlossen und die Heißluft wird zur Düse 19 geleitet.

Wie die Fig.5 zeigt, ist die Düse 19 als Schlitzdüse ausgebildet und derart schmal im Aufbau gehalten, daß die Breite des Schlitzes 46 kleiner ist eine Fugennaht 47 so daß die Heizluft gezielt in der Fugennaht 47 und an der Schweißschnur 36 zur Einwirkung kommt. Das hat den Vorteil, daß die Oberfläche des Bodenbelages nicht beeinträchtigt wird, beispielsweise infolge der Hitzeeinwirkung glänzend wird. Um diesen Effekt noch zu verstärken, sind zwischen den sich gegenüberliegenden Außenflächen der Düse 19 und ihrem Schlitz 46 spitzwinklig verlaufende Fasenflächen 48 ausgebildet.

Auf der Oberseite des Gehäuses 12 ist in einer Fassung 49 ein Gestell 51 befestigt, an dem eine Trommel 52 zur Aufnahme eines Vorrats an Schweißschnur 36 aufgewickelt ist, der über eine ebenfalls am Gehäuse 12 angebrachte Umlenkrolle 53 sowie dem Zuführrad 35 in den Bereich der Düse 19 und der Fuge 47 geführt wird. An der Stirnfläche 37 des Antriebsrades 15 ist ein kreisringförmiger, federnder bandförmiger Niederhalter 54 vorgesehen, der in gleicher Weise wie das Stützrad 16 die eingeschweißte Schweißschnur 36 in die Fuge 47 hineindrückt.

Die Wirkungsweise der Vorrichtung ist folgende:
Die Vorrichtung wird derart auf den Bodenbelag aufgesetzt, daß die Düse 19, das Zuführrad 35 und das Stützrad 16 über bzw. auf einer Fuge 47 orientiert sind. Dann wird mittels der Handhabe 33 das Zuführrad 35 durch Verschwenken der Schwinge 29 angehoben und die vom Vorrat abgezogene Schweißschnur 36 zwischen Düse 19 und Zuführrad 35 eingelegt.

Durch Verschenken des Einschalthebels 38 aus seiner Ausschaltstellung I in seine Einschlatstellung II wird durch Aufgleiten des Stiftes 42 auf die Schrägfläche 56 die Klinke 26 angehoben, wodurch der Zapfen 57 freigegeben wird, und der Ventilschieber 21 infolge des Drucks der Druckfeder 23 aus seiner Nichtheizstellung N in seine Heizstellung H gelangt und der Ventilweg 24 geschlossen und der Ventilweg 25 mit dem Zuführkanal 20 verbunden und die Heißluft über das Leitrohr 18 zur Düse 19 geleitet wird. Zugleich gelangt der Stift 42 in die Verriegelungsnut 28 der Klinke 26, die infolge der Schwerkraft über den Stift fällt, und der Einschalthebel 38 wird in seiner Einschaltstellung II festgehalten. Das Tastglied 22 gelangt in seine Taststellung B. Über die Anschlagschraube 43 wird der Taster 44 eines Mikroschalters betätigt, wodurch der Motor in Betrieb und der Wagen 10 in Vorwärtsbewegung versetzt werden.

Die Schweißschnur 36 und die Fuge 47 werden durch die Heißluft erwärmt und erweicht, und die Schweißschnur 36 wird mittels des Zuführrads 35, des Niederhalters 54 und des Stützrads 16 in die Fuge 47 eingedrückt.

Die Vorrichtung wird stillgesetzt, indem das Tastglied 22, beispielsweise durch Fahren gegen eine Wand oder von Hand, aus seiner Taststellung B in seine Nichttaststellung A bewegt wird. Dabei hebt der Zapfen 57 über die Schrägfläche 55 die Klinke 26 an, der Stift 42 kommt aus der Verriegelungsnut 28 frei, und der Einsschalthebel 38 wird von der Schenkelfeder 40 zurück in seine Ausschaltstellung I gedrückt. Der Mikroschalter wird geöffnet, weil die Anschlagschraube 43 den Taster 44 verläßt, und der Motor wird sofort stillgesetzt. Zugleich gelangt der Zapfen 57 in die Verriegelungsnut 28 und der Ventilschieber 21 gelangt wieder in seine Nichtheizstellung N, in der der erste Ventilweg 24 mit dem Zuführkanal 20 in Verbindung steht, so daß die Heißluft des Heißluftgebläses 50 ins Freie geleitet wird.

Der Bolzen 41 untergreift die Handhabe 33 und verschwenkt die Schwinge 29 im Uhrzeigersinn, wodurch das Zuführrad 35 von der Düse 19 einen größeren Abstand einnimmt und die Schweißschnur 36 freiliegt.

Es ist ein nichtdargestellter Temperaturfühler vorgesehen, der die im Bereich der Düse 19 herrschende Temperatur mißt und an der Temperaturanzeige 59 anzeigt und bei zu hoher Temperatur ein Warnsignal erzeugt.

## Patentansprüche

1. Vorrichtung zum Verschweißen von mit Fugenabstand nebeneinander verlegten plattenförmigen oder bahnenförmigen Bodenbelägen aus Kunststoffwerksoff unter Einbringen einer mittels Heißluft erweichten Schweißschnur in die Fuge, bestehend aus einem tragbaren motorisch angetriebenen Wagen, an dessen Gehäuse zwei auf einer gemeinsamen Achse sitzende Antriebsräder und ein Stützrad gelagert sind, sowie aus einem Heißluftgebläse und einer mit demselben verbundenen Düse und einem Zuführrad für die Schweißschnur,
**dadurch gekennzeichnet,** daß
die Düse (19) ortsfest am Gehäuse (12) angeordnet ist und gemeinsam mit dem Zufuhrrad (35) in einer Ebene vor der äußeren Stirnfläche (37) eines Antriebsrades (15) liegt.

2. Vorrichtung nach Anspruch 1, dadurch gekennzeichnet, daß das Stützrad (16) derart am Gehäuse (12) gelagert ist, daß es in einer Ebene mit der Düse (19) und dem Zuführrad (35) angeordnet ist und auf der Schweißfuge (47) aufliegt.

3. Vorrichtung nach den Ansprüchen 1 und 2, dadurch gekennzeichnet, daß an der äußeren Stirnfläche (37) des Antriebsrads (15) ein kreisförmiger mit geringfügig kleinerem Durchmesser als das Antriebsrad versehener elastisch ausgebildeter Niederhalter (53) für die eingeschweißte Schweißschnur (36) vorgesehen ist.

4. Vorrichtung nach den Ansprüchen 1 bis 3, dadurch gekennzeichnet, daß das Zuführrad (35) auf einer am Gehäuse (12) gelagerten Schwinge (29) sitzt und gegenüber der Düse (19) mittels einer an der Schwinge (29) vorgesehenen Handhabe (33) verschenkbar angeordnet ist.

5. Vorrichtung nach Anspruch 1, dadurch gekennzeichnet, daß die Düse (19) als Schlitzdüse ausgebildet und über ein Leitrohr (18) mit einem gehäusefesten Ventilblock (17) verbunden ist, an dem das Heißluftgebläse (50) angeschlossen ist.

6. Vorrichtung nach Anspruch 5, dadurch gekennzeichnet, daß die Breite des Schlitzes (46) der Düse (19) kleiner ist als die Breite einer Fuge (47) zwischen zwei benachbarten Platten oder Bahnen eines Bodenbelages, und daß zwischen dem Schlitz und den sich gegenüberliegenden Außenflächen der Düse (19) Fasenflächen (48) spitzwinklig verlaufen.

7. Vorrichtung nach einem der Ansprüche 1 bis 6, dadurch gekennzeichnet, daß ein im Ventilblock (17) verschiebbar gelagerter Ventilschieber (21) in einer ersten Stellung (N) den im Ventilblock ausgebildeten Zuführkanal (20) für die Heißluft über einen ersten Ventilweg (24) mit dem Freien und in einer zweiten Stellung (H) über einen zweiten Ventilweg (25) mit der Düse (19) verbindet.

8. Vorrichtung nach Anspruch 7, dadurch gekennzeichnet, daß an der einen Stirnfläche des Ventilschiebers (21) eine sich gehäuseseitig abstützende Druckfeder (23) angreift und daß an der anderen Stirnfläche des Ventilschiebers (21) ein in Bewegungsrichtung der Vorrichtung sich ins Freie enstreckendes Tastglied (22) angeordnet ist.

9. Vorrichtung nach einem der Ansprüche 1 bis 8, dadurch gekennzeichnet, daß gehäuseseitig ein Einschalthebel (38) entgegen der Kraft einer Schenkelfeder (40) verschwenkbar gelagert ist, der sich in seiner Ausschaltstellung (I) mittels eines Bolzens (41) an einer Stange der an der Schwinge (29) angeordneten Handhabe (33) abstützt, und der sich in seiner Einschaltstellung (II) mittels eines Stiftes (42) in einer Verriegelungsnut (28) einer lose am Ventilblock (17) gelagerten Klinke (26) hält.

10. Vorrichtung nach einem der Ansprüche 1 bis 9, dadurch gekennzeichnet, daß am Ventilschieber (21) ein Zapfen (57) vorgesehen ist, der bei in Ausschaltstellung (I) befindlichem Einschalthebel (38) in der Verriegelungsnut (28) der Klinke (26) liegt und daß dabei das Tastglied (22) in seiner Nichttaststellung (A) gehalten ist.

11. Vorrichtung nach einem der Ansprüche 1 bis 10, dadurch gekennzeichnet, daß die Klinke (26) durch Schwerkraft in ihrer verriegelnden Lage gehalten ist und zwei Schrägflächen (55 und 56) aufweist, von denen die eine dem Stift (42) des Einschalthebels (38) und die andere dem Zapfen (57) des Ventilschiebers (21) zugeordnet ist.

12. Vorrichtung nach einem der Ansprüche 1 bis 11, dadurch gekennzeichnet, daß bei in Ausschaltstellung (I) befindlichem Einschalthebel (38) der Zapfen (57) des in Nichttaststellung (A) stehenden Tastglieds (22) in der Verriegelungsnut (38) liegt und daß bei in Einschaltstellung (II) befindlichem Einschalthebel (38) der Stift (42) in der Verriegelungsnut (38) liegt, nachdem bei verschwenkter Klinke (26) der Zapfen (57) freigegeben und das Tastglied (22) in seine Taststellung (B) gelangt ist, und daß bei aus der Taststellung (B) in die Nichttaststellung (A) gelangtem Tastglied (22) bei verschwenkter Klinke (26) der Stift (42) freigegeben ist und der Einschalthebel (38) in seiner Ausschaltstellung (I) steht, und der Zapfen (57) in der Verriegelungsnut (38) liegt und das Tastglied (22) in seiner Nichttaststellung (A) gehalten ist.
